# EUROPEAN PATENT APPLICATION

(11) **EP 2 458 366 A1**
(43) Date of publication of application: **30.05.2012**
(21) Application number: 10714337.2
(22) Date of filing: 11.03.2010
(51) Int. Cl.: G01N 11/06

(54) **VISCOMETER AND METHOD FOR DETERMINING THE VISCOSITY OF A FLUID**

(71) Applicant: Tifell Electro Solar Sintens, S.A., 01010 Vitoria (ES)
(72) Inventor: ALBARRÁN NAVARRO, Jose Angel, E-01010 Vitoria (ES); FERNÁNDEZ DE MENDIOLA QUINTANA, Jose Ignacio, E-01010 Vitoria (ES); ARANBURU LEZKANO, Iñigo, E-01010 Vitoria (ES)
(74) Representative: Ezcurra Zufia, Maria Antonia
(86) International application number: PCT/ES2010/070147
(87) International publication number: WO 2011/110699

(57) **Abstract**

This invention has as an object a viscometer that allows quickly establishing the viscosity value of the fluid assessed and the corresponding temperature for said viscosity, and a process that allows determining the viscosity of a fluid wherein the the viscometer is connected to a microcontroller that runs an entire measurement procedure, calculates the values of the viscosity and temperature, generates proportional output signals and sends them to a control unit that has a display screen that shows these variables.

## Description

### OBJECT OF THE INVENTION

The present invention relates to a viscometer and a method for determining the viscosity of a fluid.

Due to its special configuration, the viscometer of the present invention makes possible rapidly to establish the viscosity value of the fluid in question and the temperature corresponding to said viscosity.

To carry out this measurement, the viscometer is connected to a microcontroller that executes an entire measurement process, calculates the values of viscosity and temperature, generates output signals proportional thereto and sends said signals to a control unit with a display screen where the above variables are displayed.

### BACKGROUND TO THE INVENTION

In the state of the art are known the viscometers determining the viscosity of a fluid by the time that a tank full of this fluid takes to be empty through a capillary.

In the above viscometers, the time that takes the level of the fluid to go down from a maximum height to a minimum height is visually measured, so it is no possible to automate the process.

The viscometer of the present invention resolves the above problems by providing a set of sensors and components permitting to automate the process and to determine in every time the fluid conditions (temperature and pressure) in the tank.

### DESCRIPTION OF THE INVENTION

The present invention refers to an automatic viscometer sucking in the fluid from a tank, then the fluid goes through a filter and it is driven by a pump to a measurement tank that unloads the fluid by gravity through a capillary.

This pump is connected to a microcontroller with a motor drive that activates the pump when it is necessary that the fluid goes into the tank, and stops the pump when more fluid into the tank is no needed.

The control of the level of the tank is made only by the pump, without using any valves for closing the tank outlet.

When the pump is stopped, the tank begins to empty by gravity through a capillary connected to the fluid tank without using a closing valve.

The tank presents a pressure inlet connected to a differential pressure sensor permitting the microcontroller deactivates the pump once the set maximum pressure is reached and calculates the tank emptying time and the time that the pressure takes to go down from an initial pressure (high pressure) to a final pressure (low pressure).

The emptying time is used to determine the viscosity of the fluid, by means of an algorithms sequence implemented in the microcontroller.

A temperature sensor submerged in the tank, measures the temperature of the fluid at the capillary inlet during the tank emptying process, permitting to know the average temperature when the viscosity is measured.

The microcontroller and the pressure sensor are integrated in a driver card that presents a source of electricity that feeds the components of the driver card, including a sequence of connectors for reading the analogical inputs and outputs and the digital outputs of the measured variables and including also led diodes to indicate the set alarms.

In summary, the invention refers to a viscometer comprising a measurement tank where a fluid is put in, and this fluid goes out of the tank by gravity through a capillary, **characterised in that** presents a pump driving the fluid to the measurement tank, presenting a pressure inlet of the differential pressure sensor that measures the pressure in the tank and permits the microcontroller to deactivate the pump once a set maximum pressure is reached, measures the tank emptying time as the necessary time for the measured pressure goes down from a high pressure value to a low pressure value and calculates the viscosity of the fluid.

The microcontroller of the viscometer determines the viscosity and the temperature of the fluid by means of a method consisting of these following stages:
- activation of a pump for the refilling of the fluid in a measurement tank,
- continuous reading of the pressure by means of a differential pressure sensor,
- continuous reading of the temperature by means of a temperature sensor that is submerged in the fluid,
- deactivation of the pump when the pressure has reached a set maximum value,
- counting of the tank emptying time and
- calculation of the viscosity of the fluid and of the average temperature of the fluid during the emptying of the tank.

### DESCRIPTION OF THE DRAWINGS

This descriptive report complements each other with a set of drawings, illustrative of the preferred embodiment, but not restrictive of the invention.

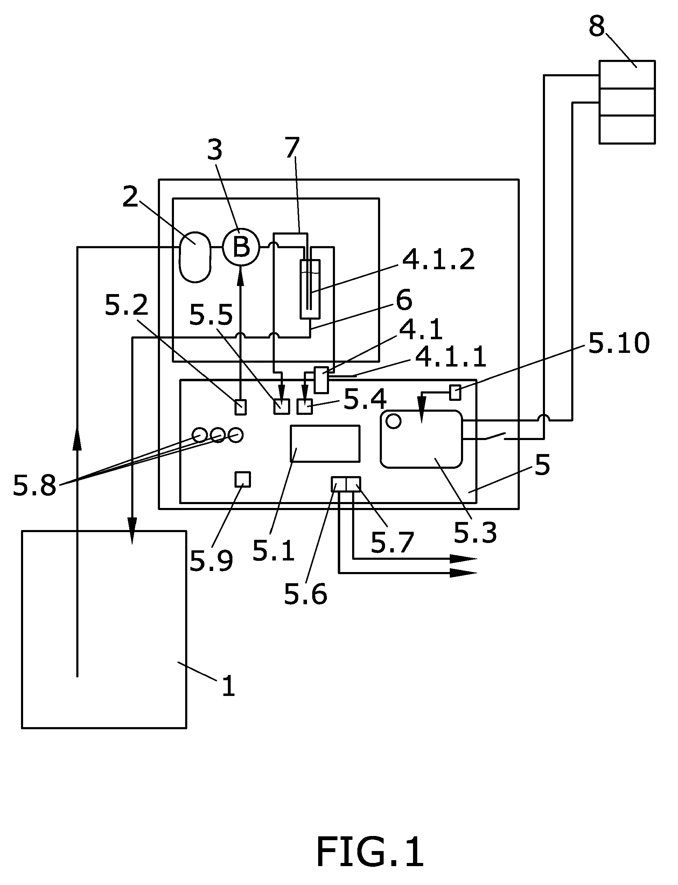

Figure 1 shows a diagram of the viscometer of the present invention, connected to the fluid tank and to the driver control.

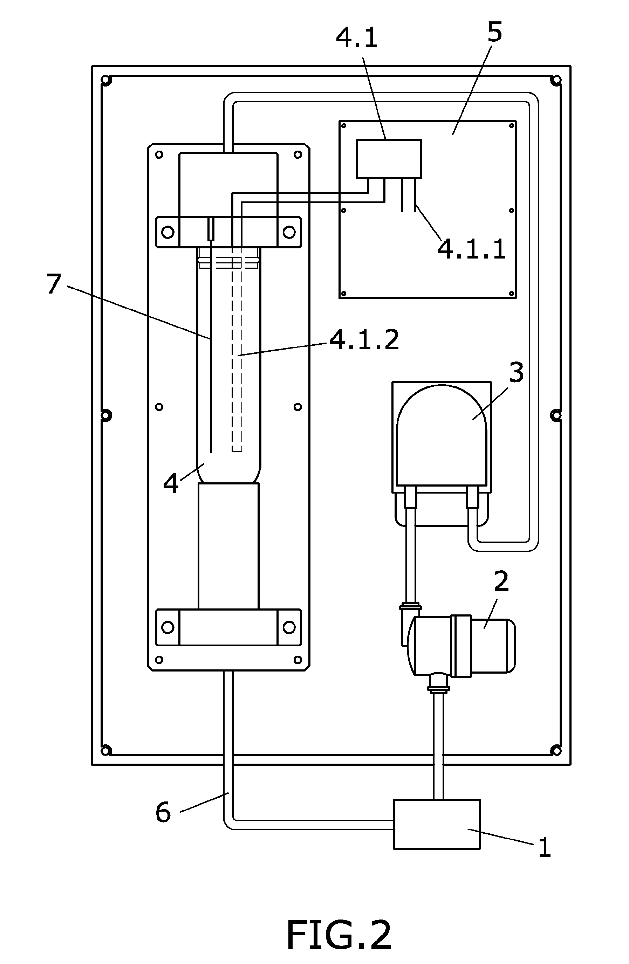

Figure 2 shows a top view of the viscometer of the present invention.

### PREFERRED EMBODIMENT OF THE INVENTION

So, according to the above statements, the present invention refers to a viscometer sucking in the fluid from a tank (1) by means of a pump (3) that makes the fluid circulates through a filter (2) that can be placed before or after the pump, where in this preferred embodiment, the fluid is fuel oil.

This pump (3) is connected to a microcontroller (5.1) integrated in a driver card (5) with a digital motor drive (5.2) that activates the pump (3) when is necessary the input of fluid in the tank (4) and deactivates the pump (3) when is not necessary more input of fluid in the tank (4).

A differential pressure sensor (4.1) integrated in a driver card (5) is connected to two pressure inlets, one inside the tank (4.1.2) and the other in contact with the air (4.1.1). This differential pressure sensor permits the microcontroller (5.1) to know continuously the height of the fluid inside the tank, to deactivate the pump (3) once a set pressure is reached, and to begin the counting of the tank (4) emptying time as the time when the pressure goes down from a high pressure point to a low pressure point.

The emptying of the tank (4) is made through a capillary (6) that is connected to the tank of the fluid.

The driver card (5) presents a source of electricity (5.3) that when is connected to the power supply (8), it feeds the microcontroller (5.1), the differential pressure sensor (4.1) and the rest of the components of the driver card.

This components are some connectors for the reading of the analogical inputs, like the analogical inputs of the temperature (5.5) of the fluid, the analogical outputs of the viscosity (5.6) and temperature (5.7) of the fluid and led diodes (5.8) for indicating the alarms relative to pump (3) failures, the blockade of the filter (2) and failures in the temperature sensors (7) submerged in the tank (4).

The alarm relating to pump (3) failures consists of a detection system that once the pump (3) is activated, a time counter (not shown) is also activated. If in the maximum permitted time for the filling of the tank (4) the maximum pressure is not reached, the process is stopped, the pump (3) stops and the alarm is activated through a first led diode.

The alarm relating to failures in the temperature sensor consists of a detection system that if the input value is out of the specified limits, the alarm is activated through a second led diode.

The alarm relating to failures in the differential pressure sensor (4.1) consists of a detection system that if the tension value produced by the sensor (4.1) is out of the specified limits, the alarm is activated through a third led diode.

Furthermore, the driver card (5) presents a communications port RS-232 with a PC for loading software and for the introduction or the modification of parameters.

The driver card (5) presents a button to make a manual reset, activate the sequence of the measurement of the viscosity and make its own auto calibration.

In this example of preferred embodiment, the capillary (6) is interchangeable and the tank (4) is disposable, whereas in other examples of embodiment, the capillary (6) is integrated or overmolded in a disposable tank (4).

The microcontroller of the viscometer determines the viscosity and the temperature of the fluid by means of a method consisting of these following stages:
- activation of a pump for the refilling of the fluid in a measurement tank,
- continuous reading of the pressure by means of a differential pressure sensor, continuous reading of the temperature by means of a temperature sensor that is submerged in the fluid,
- deactivation of the pump when the pressure has reached a set maximum value (maximum pressure),
- unloading of the fluid of the tank while the microcontroller measures the pressure and the temperature of the fluid,
- calculation of the tank emptying time as the time that pressure takes to go down from an initial pressure, or high pressure, to a final pressure, or low pressure, of adequate set values,
- calculation of the viscosity of the fluid and of the average temperature of the fluid during the emptying of the tank.

After the stage of the calculation of the viscosity of the fluid, there is a stage of actualization of the analogical outputs corresponding to the temperature (5.7) of the fluid and to the viscosity (5.6) of the fluid.

The essence of this invention is not distorted by variations of materials, shape, size and arrangement of the component elements, described in a not restrictive way, and being enough to be reproduced by an expert.

## Claims

1. Viscometer comprising a measurement tank (4) where a fluid is input and comes out from the tank (4) by gravity through a capillary (6) **characterised in that** presents a pump (3) driving the fluid to the measurement tank (4) presenting a pressure inlet (4.1.2) of the differential pressure sensor (4.1) that measures the tank pressure and permits the microcontroller (5.1) to deactivate the pump (3) once a determined maximum pressure is reached, to measure the tank (4) emptying time as the necessary time for the measured pressure to go down from a high pressure value to a low pressure value and to calculate the viscosity of the fluid.

2. Viscometer according to claim 1 **characterised in that** presents a temperature sensor (7) submerged in the fluid near the bottom of the tank permitting a microcontroller (5.1) to measure the average temperature of the fluid during the emptying of the tank (4).

3. Viscometer according to claim 1 **characterised in that** the microcontroller (5.1) is integrated in a driver card (5) presenting a motor drive (5.2) that activates the pump (3) when is necessary the input of fluid in the tank (4) and deactivates the pump (3) when is not necessary more input of fluid in the tank (4).

4. Viscometer according to claim 2 **characterised in that** sucking in the fluid from a tank (1) by means of a pump (3) that makes the fluid circulates through a filter (2) that can be placed before or after the pump.

5. Viscometer according to claim 2 **characterised in that** the driver card (5) presents a source of electricity (5.3) feeding the microcontroller (5.1), the differential pressure sensor (4.1) and the rest of the components of the driver card (5), this components are some connectors for the reading of the analogical inputs, like the analogical inputs of the temperature (5.5) of the fluid, the analogical outputs of the viscosity (5.6) and temperature (5.7) of the fluid and led diodes (5.8) for indicating the alarms relative to pump (3) failures, the blockade of the filter (2) and failures in the temperature sensors (7).

6. Viscometer according to claim 2 **characterised in that** the driver card (5) presents a communications port (5.9) RS-232 with a PC for loading software and for the introduction or the modification of parameters.

7. Viscometer according to claim 2 **characterised in that** the driver card (5) presents a button to make a manual reset, activate the sequence of the measurement of the viscosity and make its own auto calibration.

8. Viscometer according to claim 2 **characterised in that** the fluid is fuel oil.

9. Viscometer according to claim 1 **characterised in that** the capillary (6) is interchangeable and the tank (4) is disposable.

10. Viscometer according to claim 1 **characterised in that** the capillary (6) is integrated or overmolded in a disposable tank (4).

11. Method for determining the viscosity of a fluid **characterised in that** consists of these following stages carried out by means of a microcontroller (5.1):
• activation of a pump (3) for the refilling of the fluid in a measurement tank (4),
• continuous reading of the pressure by means of a differential pressure sensor (4.1),
• continuous reading of the temperature by means of a temperature sensor that is submerged in the fluid,
• deactivation of the pump (3) when the pressure has reached a set maximum value,
• calculation of the tank emptying time as the time that pressure takes to go down from an initial pressure, or high pressure, to a final pressure, or low pressure, of adequate set values,
• calculation of the viscosity of the fluid and of the average temperature of the fluid during the emptying of the tank.

12. Method for determining the viscosity of a fluid according to claim 11 **characterised in that** after the stage of the calculation of the viscosity of the fluid, there is a stage of actualization of the two obtained variables by means of the analogical outputs: the temperature (5.7) of the fluid and to the viscosity (5.6) of the fluid.

13. Method for determining the viscosity of a fluid according to claim 11 **characterised in that** the temperature of the fluid is read during the emptying of the tank (4), permitting the calculation of the average temperature of the fluid during the unloading.
